## Europäisches Patentamt

## European Patent Office

## Office européen des brevets

(11) Publication number: **0 033 717**
**A1**

# (12) EUROPEAN PATENT APPLICATION

(21) Application number: **81810020.8**

(22) Date of filing: **27.01.81**

(51) Int. Cl.³: **B 05 B 17/04**
**B 05 B 1/08, B 41 J 3/04**
**B 01 J 2/02**

(30) Priority: **30.01.80 CH 730/80**

(43) Date of publication of application:
**12.08.81 Bulletin 81/32**

(84) Designated Contracting States:
**AT BE CH DE FR GB IT LI LU NL SE**

(71) Applicant: **BATTELLE DEVELOPMENT CORPORATION**
**505 King Avenue**
**Columbus Ohio 43201(US)**

(72) Inventor: **Vollerin, Bernard**
**59, rue de Lyon**
**CH-1203 Genève(CH)**

(72) Inventor: **Trouilhet, Yves**
**4 b, Chemin des Tattes**
**CH-1222 Vesenaz(CH)**

(72) Inventor: **Armanet, Jean-Michel**
**8, rue des Bossons**
**CH-1213 Onex(CH)**

(74) Representative: **Dousse, Blasco et al,**
**7, route de Drize**
**CH-1227 Carouge/Genève(CH)**

(54) Process for breaking a jet into a plurality of droplets of determined size and device for carrying out this process.

(57) A device for breaking up a jet is based on the principle that variations in the speed causing the breaking-up are impressed on the jet by inducing pressure variations in the liquid. An agitator disc (16), provided with perforations (14) having a cross-section which increases from one end to the other, is immersed in an enclosure (1) fed with liquid, and is driven with a reciprocating vertical movement e.g. by an electromagnet (13) which acts on a ferromagnetic membrane (11) suspended by an annular spring (12). The amplitude of the vibrations and the distance of the disc (16) from the base (2) of the enclosure (1), which is pierced by calibrated holes (2a), are such as to produce a circulation of the liquid within the enclosure and through the holes, and to produce sized droplets from the holes.

## PROCESS FOR BREAKING A JET INTO A PLURALITY OF DROPLETS
## OF DETERMINED SIZE AND DEVICE FOR CARRYING OUT THIS PROCESS

The breaking of a laminar-flow jet is a method currently used for forming droplets of determined size which, after cooling, evaporation of a solvent or crystallisation, give perfectly spherical granules. This method is widely used in the chemical industry for manufacturing fertilisers, detergent products and drugs. It is also used for printing by means of ink jets. It consists of forming one or more laminar-flow jets of determined size at the outlet of an enclosure, and inducing in this jet or jets variations in the outflow speed at determined frequencies, chosen as a function of the outflow speed and viscosity of the liquid such as to break the jet or jets into droplets. The oscillations which generate these speed variations can be induced in many ways, in particular by vibrating either the liquid distribution enclosure or nozzle, or the jet-formation apertures, or by inducing pressure variations in the liquid, as described in patents NL 65,099 and GB 1,266,874.

Whatever the means used, a certain volume of liquid must be disposed in proximity to the nozzle. For installations of high flow rate, of the order of some hundreds of litres/hour, provided with several distribution apertures per enclosure, the volume immobilised in this manner can be relatively large, especially if the jets are formed by gravity and the liquid is relatively viscous. This liquid volume is practically immobile, so that if it contains a suspended product, the sedimentation of the solid particles progressively obstructs the apertures, and the composition of the granules formed does not correspond to the required composition. The object of the present invention is to remedy, at least partly, such drawbacks. Thus, this invention concerns a process for breaking a jet into a plurality of droplets of determined size starting from a product suspended in a liquid located in an enclosure provided with at least one outlet aperture for forming said jet. This process is characterized by the fact that one subjects the liquid in the enclosure to alternative pressure variations for modifying the flow speed of this jet and provoke its breaking and that, simultaneously, one generates upwardly, downwardly circulating currents within the liquid mass contained in said enclosure for maintaining said product in suspension therein.

The present invention also provides a device for implementing this process, characterized by the fact of comprising an enclosure, an aperture for feeding said enclosure with a liquid for forming the droplets, at least one outlet aperture for forming the jet, a movable member in contact with the liquid, and means for oscillating said member at a given frequency and amplitude, said movable member being a disc immersed in the liquid and extending perpendicular to its axis of oscillation, and traversed by conduits the axes of which are parallel to the axis of oscillation, and the diameters of which decrease from one end to the other in order to generate a circulation of the liquid from the end of greater diameter to the end of smaller diameter following the oscillations impressed on the disc.

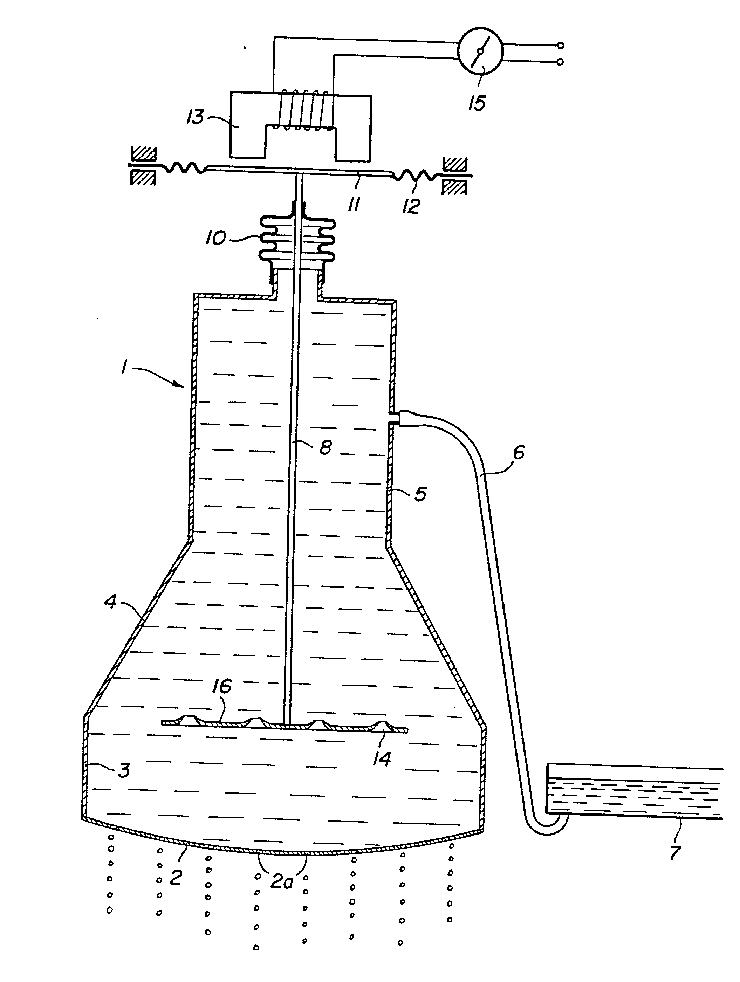

The single figure of the accompanying drawing is a diagrammatic illustration, by way of example, of one embodiment of the device for implementing the process of the present invention.

This device comprises an enclosure 1 formed from a body of revolution, of which the base 2 is in the form of a spherical cap pierced by a plurality of holes 2a calibrated according to the diameter of the required granules. The enclosure 1 comprises a cylindrical lateral wall 3 adjacent to the base, followed by a frusto-conical portion 4 with an enclosed angle of 60° at its top, and followed by a second cylindrical portion 5. A conduit 6 extends laterally from the cylindrical portion 5, and is connected to an overflow vessel 7, the level of liquid in which determines the hydrostatic pressure in the enclosure 1. The latter hermetically sealed with the exception of the calibrated holes which traverse the base 2.

A vertical rod 8 extends axially through the enclosure 1 and traverses its upper wall in a sealed manner by virtue of a flexible sleeve 10 fixed at one end to the upper wall and at the other end to the rod 8. The upper end of said rod is fast with a ferromagnetic membrane 11 resiliently mounted, by means of an annular spring 12, facing a vibration-generating electromagnet 13 fed with a current having a frequency corresponding to the required vibration frequency. The resonance frequency of the annular spring 12 matches the vibration frequency. A voltage-adjustment device 15 is connected into the supply circuit of the electromagnet 13 in order to enable the vibration amplitude of the membrane 11 to be adjusted.

The lower end of the rod 8 carries an agitator disc 16 provided with perforations 14. Each perforation 14 has a frusto-conical wall, the top of which is situated above the disc 16.

Tests on the formation of sized droplets with simultaneous agitation have been carried out with an apparatus of the type described, having the following dimensions:

The diameter of the base 2 -of the enclosure 1 was 230 mm, and its radius of curvature was 390 mm. It was traversed by 34 cylindrical holes each of 1.6 mm diameter. The level of the overflow vessel 7 was situated between 20 and 30 mm above the base 2, and the water flow rate was between 140 and 200 litres/hour.

The agitator disc 16 had a diameter of 135 mm, and comprised 37 holes each 5 mm long having an upper end diameter of 8 mm and a lower end diameter of about 14 mm. These holes are sized in order to generate a circulation of the liquid from the bottom upwards as a result of the reciprocating vertical movement of the agitator disc 16.

Droplet formation tests were carried out with this installation fed with water. During the first stage, the agitator disc 16 was disposed at about 20 mm from the base of the enclosure. The supply voltage for the electromagnet 13 was so adjusted that the amplitude of the vibrations enabled correctly sized droplets to be obtained which were free from fines, when observed with a stroboscope. The production of sized droplets under such conditions require a very small amplitude, of the order of 0.1 to 0.2 mm. However, the vibrating device used had an amplitude of the order of 2 mm for a supply voltage of 220 V, whereas the tests showed that a supply voltage of 20 to 40 V was required to obtain sized droplets. By colouring the water with ink or fluorescein, it was shown that at this amplitude there was no apparent circulation of the liquid through the perforations 14 of the agitator disc 16. Only starting from a voltage of the order of 100 to 150 V did the vibration amplitude of the agitator disc become sufficient to create such a circulation. However, at such an amplitude and under the aforesaid conditions and dimensions, fines appeared in the stream of droplets formed.

In order to remedy this drawback, the agitator disc 16 was withdrawn from the base 2 of the enclosure 1 to a distance of 60 to 70 mm. At this distance, and on supplying the electromagnet 13 at between 100 and 150 V, corresponding to an amplitude of about 1 to 2 mm, it was observed with the stroboscope that fines had disappeared, and all droplets were of uniform size. The liquid contained in the enclosure 1 circulated upwards through the perforations 14 of the agitator disc 16 and downwards over the periphery of said disc, this circulation being clearly visible on injecting a dye into the water. The liquid was kept thus constantly in movement, ensuring mixing of the suspended particles and liquid. By virtue of this liquid mixing, the composition of the sized droplets remains uniform during the granulation operation, and the suspended particles in movement cannot block the aperture in the base 2 of the enclosure by becoming deposited on them. In the described example, the electromagnet 13 was supplied with alternating current at 50 Hz from the local supply mains, and the water flow rate was between 140 and 200 l/h. This method of supply using the local supply mains is important for various reasons. It enables the electromagnet to be simply connected to the mains. The hydrostatic pressure necessary is low, and can be obtained using a simple syphon as heretofore described. This granulation or jet-breaking device is particularly adapted for operating at relatively low frequencies and at amplitudes which are sufficiently high to generate circulation of the liquid in the device enclosure. Because of its low frequency operation, the device is equally well suited to simultaneously breaking up a plurality of jets starting from a common enclosure, as at this frequency it is not necessary to disperse the jet when split into droplets. The device is particularly suitable for distributing sized droplets over a fluidised bed, as the droplets formed at low frequency can be absorbed progressively by the fluidised bed. The size of the installation can be easily adapted to requirements, and the flow rate can be increased be simply increasing the number of calibrated holes through the base 2 of the enclosure 1, of which the surface area can be varied in consequence. The simplicity of the device, deriving from the fact that it can be fitted with a commercial agitator and can be supplied at mains frequency, together with its low hydrostatic operating pressure, are equally important aspects in that they lead to reliable operation requiring little or no maintenance. The device is easy to set up, and can be adapted to liquids of different viscosities.

What we claim is:

1. A process for breaking a jet into a plurality of droplets of determined size starting from a product suspended in a liquid located in an enclosure provided with at least one outlet aperture for forming said jet, characterized by the fact that one subjects the liquid in the enclosure to alternative pressure variations for modifying the flow speed of this jet and provoke its breaking and that, simultaneously, one generates upwardly, downwardly circulating currents within the liquid mass contained in said enclosure for maintaining said product in suspension therein.

2. A device for implementing the process of claim 1, characterized by the fact of comprising an enclosure, an inlet aperture for feeding said enclosure with a liquid for forming the droplets, at least one outlet aperture for forming the jet, a movable member in contact with the liquid, and means for oscillating said member at a given frequency and amplitude, said movable member being formed by a disc immersed in the liquid and extending perpendicular to its axis of oscillation, which disc is traversed by conduits having axes which are parallel to the axis of oscillation, and having diameters which decrease from one end to the other for generating a circulation of the liquid from the conduit end of greater diameter to the end of smaller diameter in consequence of the oscillations of the disc.

3. A device as claimed in claim 2, further comprising a vessel of liquid, the base of which is connected to said feed aperture, the liquid having a free surface, whereby the hydrostatic pressure inside said enclosure is determined by the free surface level of liquid in said vessel.

0033717

Application number

EP 81 81 0020

# European Patent Office

## EUROPEAN SEARCH REPORT

| DOCUMENTS CONSIDERED TO BE RELEVANT | | | CLASSIFICATION OF THE APPLICATION (Int Cl.³) |
|---|---|---|---|
| Category | Citation of document with indication, where appropriate, of relevant passages | Relevant to claim | |
| D | <u>NL - C - 65 099</u> (STAATSMIJNEN IN LIMBURG) <br> * Claims 1,3; figures * | 1,2 | B 05 B 17/04 <br> 1/08 <br> B 41 J 3/04 <br> B 01 J 2/02 |
| D | <u>GB - A - 1 266 874</u> (FISONS LTD.) <br> * Page 3, lines 87-130; page 4, lines 1-9, 71-96; figure 2 * | 1,2 | |
| | <u>US - A - 3 679 132</u> (D.A. VEHE) <br> * In its entirety * | 1,2 | TECHNICAL FIELDS SEARCHED (Int. Cl.³) |
| | <u>FR - A - 2 299 093</u> (R.M. KALTEN-BACH) <br> * In its entirety * | 1,2 | B 05 B <br> B 41 J <br> B 01 J |
| | <u>FR - A - 2 242 850</u> (P.S. VOLOSHIN) <br> * In its entirety * | 1,2 | |
| A | <u>US - A - 2 979 764</u> (E.A. BERKELEY) | | |

----

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 28-04-1981 | COLPAERT |

EPO Form 1503.1  06.78